# NEUE EUROPÄISCHE PATENTSCHRIFT

(11) **EP 0 918 212 B2**
(45) Veröffentlichungstag und Bekanntmachung des Hinweises auf die Entscheidung über den Einspruch: **15.11.2006**
(45) Hinweis auf die Patenterteilung: 27.02.2002
(21) Anmeldenummer: 98121678.1
(22) Anmeldetag: 13.11.1998
(51) Int. Cl.: G01D 5/48, G01K 1/02, G01K 17/06, G08C 17/02

(54) **Verfahren und Vorrichtung zur Erfassung und Auswertung von temperaturabhängigen Verbrauchswerten oder Messwerten anderer physikalischer Grössen**
Method ans apparatus for the acquisition and evaluation of temperature dependent consumption values or other physical measuring values
Méthode et dispositif pour l'acquisition et l'exploration de valeurs de consomation qui dépendent de la température ou autres valeurs de mesures physiques

(30) Priorität: 19.11.1997 DE 19751214
(43) Veröffentlichungstag der Anmeldung: 26.05.1999
(73) Patentinhaber: ista Deutschland GmbH, 45131 Essen (DE)
(72) Erfinder: Wolff, Manfred, Dipl.Ing, D 68526 Ladenburg (DE); Kümpel, Wolfgang, Dipl.Ing, D 42697 Solingen (DE); Mügge, Günter, Dr.Dipl-Ing, D 48159 Münster (DE)
(74) Vertreter: Stark, Walter

(56) Entgegenhaltungen:
- EP-A- 0 325 685
- WO-A-92/14999
- WO-A-97/29466
- DE-A- 3 007 485
- DE-A- 3 022 829
- DE-A- 4 225 042
- DE-A- 4 235 187
- DE-A- 4 312 596
- DE-A- 19 523 258
- DE-C- 322 660
- DE-C- 470 963
- GB-A- 2 054 850
- US-A- 4 731 578
- US-A- 4 890 093
- US-A- 5 056 107
- US-A- 5 406 237
- PATENT ABSTRACTS OF JAPAN vol. 010, no. 084 (P-442), 3. April 1986 & JP 60 220833 A (TOSHIBA KK), 5. November 1985

## Beschreibung

Die Erfindung betrifft ein Verfahren zur Erfassung und Auswertung von temperaturabhängigen Verbrauchswerten oder Meßwerten anderer physikalischer Größen, wobei Sensoren, insbesondere z. B. zur Heizkostenverteilung in an Heizkörpern oder dergleichen angebrachte Heizkostenverteiler integrierte Temperatursensoren die Meßwerte erfassen und die Meßwerte an eine insbesondere zentrale und rechnergestützt arbeitende Auswerteeinrichtung weitergeleitet werden.

Aus der Praxis sind derartige Verfahren bekannt, bei denen die Sensoren mit der Auswerteeinrichtung über Kabel verbunden sind und eine Batterie, ein Akkumulator oder ein Netzgerät für die zum Betrieb notwendige Energieversorgung vorgesehen ist.

Nachteilig hierbei ist zum einen die aufwendige, kostenintensive und optisch eher nachteilige Verkabelung und zum anderen die bei Batterie- oder Akkumulatorbetrieb durch die Leistung der Stromquelle begrenzte Betriebszeit. In diesen Fällen muß in regelmä-ßigen Intervallen ein Wechsel bzw. ein Aufladen der Stromquelle erfolgen, was ebenfalls aufwendig- und sofern es durch Servicepersonal erfolgt - auch sehr kostspielig ist.

Weiterhin wurden Verfahren entwickelt, bei denen für die Energieversorgung eine Solarzelle (JP-A-60 220 833) oder eine Einrichtung zur Gewinnung der Energie aus dem Magnetfeld eines Stromkabels (WO-A-92 14 999) vorgesehen ist.

Nachteilig hierbei ist, dass zum einen eine Stromversorgung nur bei ausreichenden Lichtverhältnissen, also tagsüber, erfolgt, und somit ein Einsatz in Kellerräumen und dgl. von vornherein ausgeschlossen ist.

Zum anderen kann eine Stromgewinnung aus einem Stromkabel nur dann erfolgen, wenn ein solches in erreichbarer Nähe vorhanden ist. Die Durchführung eines solchen Verfahrens ist in Bereichen ohne Stromkabel hingegen nicht möglich.

Aufgabe der Erfindung ist es, ein Verfahren zur Erfassung und Auswertung von temperaturabhängigen Verbrauchswerten oder Meßwerten anderer physikalischer Größen, wobei Sensoren, insbesondere Temperatursensoren die Meßwerte erfassen und die Meßwerte an eine insbesondere zentrale und rechnergestützt arbeitende Auswerteeinrichtung weitergeleitet werden, anzugeben, mit dem die vorgenannten Nachteile vermieden werden.

Diese Aufgabe wird gelöst durch ein Verfahren gemäß der Ansprüche 1 oder 2.

Hierdurch entfällt zum einen eine aufwendige Installation einer Verkabelung der Sensoren, und die Sensoren können ohne optische Beeinträchtigung frei wählbarplaziertwerden. Zum anderen ist ein zeitlich unbegrenzter Betrieb möglich, so daß regelmäßige Serviceintervalle nicht nötig sind.

Vorzugsweise kann die Energieversorgung mittels einem aus einem Prozeßenergie in elektrische Energie umsetzenden Wandler, einem an dem Wandler angekoppelten Umwandlungselement mit nichtlinearer Kennlinie zur Umwandlung der vom Wandler erzeugten niederfrequenten elektrischen Energie in hochfrequente elektrische Energie und einem Filter zur Schmalbandsignal-Selektion aus der hochfrequenten elektrischen Energie bestehenden Stromerzeuger geschehen, so daß je nach verwendetem Filter bzw. dessen Einstellung der Sendeeinrichtung lediglich ein genau definiertes Hochfrequenz-Schmalband zur Verfügung gestellt wird. Dies ist zum einen in gesetzlichen Vorschriften begründet, die für derartige Anwendungen lediglich bestimmte Hochfrequenzbereiche freigeben, und zum anderen sind die Höhe der Frequenz und die Antennenlänge umgekehrt proportional zueinander, so daß bei gleichem Wirkungsgrad die erforderliche Länge der Antenne durch die Hochfrequenzverwendung reduziert wird, was die erforderliche Baugröße reduziert, wodurch eine Materialersparnis bewirkt wird.

Vorteilhafterweise kann das Schmalbandsignal durch eine im Filter enthaltene Kodiereinrichtung kodiert werden, so daß die Meßwerte mit einer Identifizierungskennung zwecks Zuordnung zu einem bestimmten Sensor versehen werden und insbesondere verschlüsselt mittels Funkübertragung zur Auswerteeinrichtung weitergeleitet werden, was unter anderem die Übertragungssicherheit sowohl in bezug auf Fehlerquellen als auch die Manipulationssicherheit erhöht.

Bei einem bevorzugten Ausführungsbeispiel der Erfindung kann ein als Piezoelement ausgebildeter Wandler mechanische Prozeßenergie, ein als Induktoreinrichtung mit Magnet und elektrischer Spule ausgebildeter Wandler mechanische Prozeßenergie, oder ein als pyroelektrisches Element oder Thermoelement bzw. als Thermoelementanordnung ausgebildeter Wandler thermische Prozeßenergie umsetzen, so daß durch den jeweils entsprechenden Wandler bzw. durch Kombination mehrerer Wandler je nach Bedarfsfall und zur Verfügung stehender, im Umfeld befindlicher Energie eine sichere Stromversorgung der Sendeeinrichtung gewährleistet ist.

Erfindungsgemäß kann die vom Stromerzeuger umgewandelte, über den momentanen Bedarf der Vorrichtung hinausgehende Energie in einem Energiespeicher wie z. B. Akkumulator, Kondensator oder dergleichen gespeichert werden, so daß bei intervallmäßig im Umfeld befindlicher Energie, wie z. B. Tageslicht, eine Kombination mehrerer Wandler zum Ausgleich der energiefreien Perioden vermieden werden kann und auch mit einem Wandler eine ständige Energieversorgung sichergestellt ist.

Vorteilhafterweise kann ein als Entladungselement, insbesondere als Funkenstrecke oder Gasentladungsröhre oder als Diode, insbesondere als im Sperr-Durchbruch arbeitende Diode, als Varaktordiode bzw. als Avalanche-Halbleiterelement ausgebildetes Umwandlungselement mit nichtlinearer Kennlinie die niederfrequente elektrische Energie in hochfrequente elektrische Energie umwandeln, so daß eine Funkübertragung ermöglicht wird.

Erfindungsgemäß kann ein als Oberflächenwellen-Anordnung, insbesondere als Resonatoranordnung, als Verzögerungsleitung bzw. als dispersive Verzögerungsleitung, oder ein als dielektrisches Filter, als mechanisches Filter, als Volumenschwinger bzw. als LC-Filter ausgebildetes Filter ein Schmalbandsignal aus der hochfrequenten elektrischen Energie selektieren, so daß durch eine speziellere Auslegung z. B. der Antenne um eine genauere Abstimmung der einzelnen Bauteile aufeinander die Funktionsweise verbessert und die Funktionssicherheit erhöht werden kann.

Bei einem bevorzugten Ausführungsbeispiel der Erfindung kann das als Sensor für eine physikalische Größe ausgebildete/wirksame Filter das Verhalten einer physikalischen Größe erfassen, so daß durch Einsparung eines separaten Bauteiles sowohl der Fertigungsaufwand als auch die Herstellkosten verringert werden.

Die Erfindung betrifft weiterhin eine Vorrichtung gemäß der Ansprüche 16 oder 17.

Auch kann der Stromerzeuger ein Filter wie z. B. eine Oberflächenwellen-Anordnung, insbesondere eine Resonatoranordnung, eine insbesondere dispersive Verzögerungsleitung, ein dielektrisches oder mechanisches Filter, einen Volumenschwinger, ein LC-Filter etc. zur Schmalbandsignal-Selektion aus der hochfrequenten elektrischen Energie aufweisen, so daß durch eine speziellere Auslegung z. B. der Antenne um eine genauere Abstimmung der einzelnen Bauteile aufeinander die Funktionsweise verbessert und die Funktionssicherheit erhöht werden kann.

Vorzugsweise kann ein Energiespeicherwie z. B. ein Akkumulator, ein Kondensator, eine eventuelle Kapazität des Stromerzeugers oder dergleichen zur Speicherung der vom Stromerzeuger umgewandelten, über den momentanen Bedarf hinausgehenden Energie vorgesehen sein, so daß auch mit nur periodisch betreibbaren Stromerzeugern eine dauerhafte Energieversorgung gewährleistet werden kann. Hierbei können auch Stromspeichereigenschaften von Bauteilen des Stromerzeugers, wie z. B. des pyroelektrischen Elementes oder dergleichen genutzt werden.

Erfindungsgemäß kann zur Erfassung des Verhaltens einer physikalischen Größe der Filter als Sensor für eine physikalische Größe ausgebildet sein, so daß durch Einsparung eines separaten Bauteiles sowohl der Fertigungsaufwand als auch die Herstellkosten verringert werden.

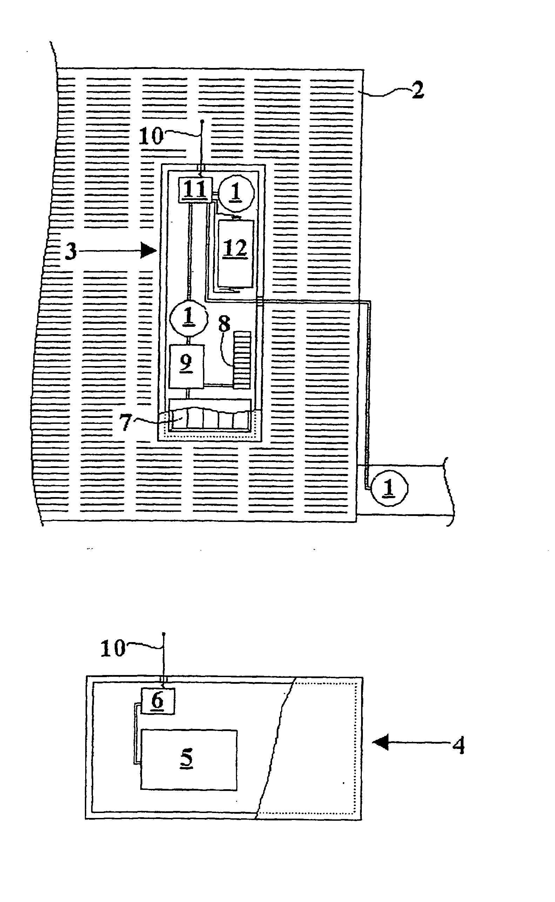

Im folgenden wird das erfindungsgemäße Verfahren anhand einer erfindungsgemäßen Vorrichtung erläutert. Die einzige Figur zeigt eine Vorrichtung zur Erfassung und Auswertung von temperaturabhängigen Verbrauchswerten oder Meßwerten anderer physikalischer Größen, die zur Heizkostenverteilung Temperatursensoren 1, welche zum Teil in einen an einem Heizkörper 2 angebrachten Heizkostenverteiler 3 integriert sind, aufweist.

Weiterhin ist eine für mehrere, in der Zeichnung jedoch nicht dargestellte Heizkostenverteiler 3 zuständige zentrale Auswerteeinrichtung 4 mit einem Auswerterechner 5 und einer eine Antenne 10 aufweisenden Empfangseinrichtung 6 für Funksignale vorgesehen.

Der Heizkostenverteiler 3 weist einen Stromerzeuger auf, der als Prozeßenergie in elektrische Energie umsetzende Wandler sowohl eine Solarzelle 7 als auch eine Thermoelementanordnung 8 aufweist. Diese sind an ein als Entladungselement 9 ausgebildetes Umwandlungselement mit nicht linearer Kennlinie zur Umwandlung der von Solarzelle 7 und Thermoelementanordnung 8 erzeugten niederfrequenten elektrischen Energie in hochfrequente elektrische Energie angeschlossen. Über einen Filter, der im vorliegenden Fall durch Ausgestaltung als Oberflächenwellen-Anordnung als Temperatursensor 1 wirksam ist, ist das Entladungselement 9 mit einer eine Antenne 10 aufweisende Sendeeinrichtung 11 verbunden. Zur Speicherung der über den momentanen Bedarf hinausgehenden erzeugten Energie ist ein als Akkumulator 12 ausgebildeter Energiespeicher vorgesehen.

## Patentansprüche

1. Verfahren zur Erfassung und Auswertung von temperaturabhängigen Verbrauchswerten oder Messwerten anderer physikalischer Größen, wobei Sensoren die Messwerte erfassen und die Messwerte mittels Funkübertragung von mindestens einer mit den Sensoren verbundenen Sendeeinrichtung (11) zu einer mit einer Auswerteeinrichtung (4) verbundenen Empfangseinrichtung weitergeleitet werden, **dadurch gekennzeichnet, dass** die Sendeeinrichtung(en) (11) von einem im Umfeld befindliche mechanische Energie umwandelnden Stromerzeuger mit elektrischer Energie versorgt wird (werden), wobei als Sensoren zur Heizkostenverteilung in an Heizkörpern (2) oder dergleichen angebrachte Heizkostenverteiler (3) integrierte Temperatursensoren (1) verwendet werden und die Energieversorgung mittels einem aus einem Prozessenergie in elektrische Energie umsetzenden Wandler, einem an dem Wandler angekoppelten Umwandlungselement mit nichtlinearer Kennlinie zur Umwandlung der vom Wandler erzeugten niederfrequenten elektrischen Energie in hochfrequente elektrische Energie bestehenden Stromerzeuger erfolgt.

2. Verfahren zur Erfassung und Auswertung von temperaturabhängigen Verbrauchswerten oder Messwerten anderer physikalischer Größen, wobei Sensoren die Messwerte erfassen und die Messwerte mittels Funkübertragung von mindestens einer mit den Sensoren verbundenen Sendeeinrichtung (11) zu einer mit einer Auswerteeinrichtung (4) verbundenen Empfangseinrichtung weitergeleitet werden, insbesondere nach Anspruch 1, **dadurch gekennzeichnet, dass** die Sendeeinrichtung(en) (11) von einem im Umfeld befindliche thermische Energie umwandelnden Stromerzeuger mit elektrischer Energie versorgt wird (werden), wobei als Sensoren zur Heizkostenverteilung in an Heizkörpern (2) oder dergleichen angebrachte Heizkostenverteiler (3) integrierte Temperatursensoren (1) verwendet werden und die Energieversorgung mittels einem aus einem Prozessenergie in elektrische Energie umsetzenden Wandler, einem an dem Wandler angekoppelten Umwandlungselement mit nichtlinearer Kennlinie zur Umwandlung der vom Wandler erzeugten niederfrequenten elektrischen Energie in hochfrequente elektrische Energie bestehenden Stromerzeuger erfolgt.

3. Verfahren nach einem der vorhergehenden Ansprüche, **dadurch gekennzeichnet, dass** die Energieversorgung mittels einem aus einem Prozessenergie in elektrische Energie umsetzenden Wandler, einem an dem Wandler angekoppelten Umwandlungselement mit nichtlinearer Kennlinie zur Umwandlung der vom Wandler erzeugten niederfrequenten elektrischen Energie in hochfrequente elektrische Energie und einem Filter zur Schmalbandsignal-Selektion aus der hochfrequenten elektrischen Energie bestehenden Stromerzeuger geschieht.

4. Verfahren nach Anspruch 3, **dadurch gekennzeichnet, dass** das Schmalbandsignal durch eine im Filter enthaltene Kodiereinrichtung kodiert wird.

5. Verfahren nach einem der vorhergehenden Ansprüche, **dadurch gekennzeichnet, dass** die Auswerteeinrichtung (4) zentral und rechnergestützt arbeitet.

6. Verfahren nach einem der vorhergehenden Ansprüche, **dadurch gekennzeichnet, dass** die Sendeeinrichtung(en) (11) eine Antenne (10) aufweist (aufweisen).

7. Verfahren nach Anspruch 1 oder einem der Ansprüche 2 bis 6, soweit auf Anspruch 1 rückbezogen, **dadurch gekennzeichnet, dass** ein als Piezoelement ausgebildeter Wandler mechanische Prozessenergie umsetzt.

8. Verfahren nach Anspruch 1 oder einem der Ansprüche 2 bis 7, soweit auf Anspruch 1 rückbezogen, **dadurch gekennzeichnet, dass** ein als Induktoreinrichtung mit Magnet und elektrischer Spule ausgebildeter Wandler mechanische Prozessenergie umsetzt.

9. Verfahren nach Anspruch 2 oder einem der Ansprüche 3 bis 8, soweit auf Anspruch 2 rückbezogen, **dadurch gekennzeichnet, dass** ein als pyroelektrisches Element oder Thermoelement bzw. als Thermoelementanordnung (8) ausgebildeter Wandler thermische Prozessenergie umsetzt.

10. Verfahren nach einem der Ansprüche 1 bis 9, **dadurch gekennzeichnet, dass** die vom Stromerzeuger umgewandelte, über den momentanen Bedarf der Vorrichtung hinausgehende Energie in einem Energiespeicher wie z.B. Akkumulator (12), Kondensator oder dergleichen gespeichert wird.

11. Verfahren nach Anspruch 3 oder einem der Ansprüche 4 bis 10, soweit auf Anspruch 3 rückbezogen, **dadurch gekennzeichnet, dass** ein Entladungselement (9), insbesondere als Funkenstrecke oder Gasentladungsröhre ausgebildetes Umwandlungselement mit nichtlinearer Kennlinie die niederfrequente elektrische Energie in hochfrequente elektrische Energie umwandelt.

12. Verfahren nach Anspruch 3 oder einem der Ansprüche 4 bis 10, soweit auf Anspruch 3 rückbezogen, **dadurch gekennzeichnet, dass** ein als Diode, insbesondere als im Sperr-Durchbruch arbeitende Diode, als Varaktordiode bzw. als Avalanche-Halbleiterelement ausgebildetes Umwandlungselement mit nichtlinearer Kennlinie die niederfrequente elektrische Energie in hochfrequente elektrische Energie umwandelt.

13. Verfahren nach Anspruch 4 oder einem der Ansprüche 5 bis 12, soweit auf Anspruch 4 rückbezogen, **dadurch gekennzeichnet, dass** ein als Oberflächenwellen-Anordnung, insbesondere als Resonatoranordnung, als Verzögerungsleitung bzw. als dispersive Verzögerungsleitung ausgebildetes Filter ein Schmalbandsignal aus der hochfrequenten elektrischen Energie selektiert.

14. Verfahren nach Anspruch 4 oder einem der Ansprüche 5 bis 12, soweit auf Anspruch 4 rückbezogen, **dadurch gekennzeichnet, dass** ein als dielektrisches Filter, als mechanisches Filter, als Volumenschwinger bzw. als LC-Filter ausgebildetes Filter ein Schmalbandsignal aus der hochfrequenten elektrischen Energie selektiert.

15. Verfahren nach Anspruch 4 oder einem der Ansprüche 5 bis 14, soweit auf Anspruch 4 rückbezogen, **dadurch gekennzeichnet, dass** das als Sensor für eine physikalische Größe ausgebildetes/wirksames Filter das Verhalten einer physikalischen Größe erfasst.

16. Vorrichtung zur Erfassung und Auswertung von temperaturabhängigen Verbrauchswerten oder Messwerten anderer physikalischer Größen, mit die Messwerte erfassenden Sensoren und einer Auswerteeinrichtung (4), insbesondere zur Durchführung des Verfahrens nach einem der Ansprüche 1 bis 15, **dadurch gekennzeichnet, dass** zur Weiterleitung der Messwerte mittels Funkübertragung (eine) mit dem(den) Sensor(en) verbundene Sendeeinrichtung(en) (11) mit einem die Energieversorgung der Sendeeinrichtung (11) gewährleistenden, im Umfeld befindliche mechanische Energie umwandelnden Stromerzeuger vorgesehen sind(ist), wobei als Sensoren zur Heizkostenverteilung in an Heizkörpern (2) oder dergleichen angebrachte Heizkostenverteiler (3) integrierte Temperatursensoren (1) vorgesehen sind und der Stromerzeuger aus einem Prozessenergie in elektrische Energie umsetzenden Wandler wie z.B. ein Piezoelement, eine Induktoreinrichtung mit Magnet und elektrischer Spule, ein pyroelektrisches Element oder ein Thermoelement bzw. eine Thermoelementanordnung (8) etc. und einem an dem Wandler angekoppelten Umwandlungselement mit nicht linearer Kennlinie zur Umwandlung der vom Wandler erzeugten niederfrequenten elektrischen Energie in hochfrequente elektrische Energie wie z.B. ein Entladungselement (9), eine Funkenstrecke oder eine Gasentladungsröhre, eine insbesondere im Sperrdurchbruch arbeitende Diode, eine Varaktordiode bzw. ein Avalanche-Halbleiterelement etc. besteht.

17. Vorrichtung zur Erfassung und Auswertung von temperaturabhängigen Verbrauchswerten oder Messwerten anderer physikalischer Größen, mit die.Messwerte erfassenden Sensoren und einer Auswerteeinrichtung (4), insbesondere zur Durchführung des Verfahrens nach einem der Ansprüche 1 bis 15, insbesondere nach Anspruch 16, **dadurch gekennzeichnet, dass** zur Weiterleitung der Messwerte mittels Funkübertragung (eine) mit dem(den) Sensor(en) verbundene Sendeeinrichtung(en) (11) mit einem die Energieversorgung der Sendeeinrichtung (11) gewährleistenden, im Umfeld befindliche thermische Energie umwandelnden Stromerzeuger vorgesehen sind(ist), wobei als Sensoren zur Heizkostenverteilung in an Heizkörpern (2) oder dergleichen angebrachte Heizkostenverteiler (3) integrierte Temperatursensoren (1) vorgesehen sind und der Stromerzeuger aus einem Prozessenergie in elektrische Energie umsetzenden Wandler wie z.B. ein Piezoelement, eine Induktoreinrichtung mit Magnet und elektrischer Spule, ein pyroelektrisches Element oder ein Thermoelement bzw. eine Thermoelementanordnung (8) etc. und einem an dem Wandler angekoppelten Umwandlungselement mit nicht linearer Kennlinie zur Umwandlung der vom Wandler erzeugten niederfrequenten elektrischen Energie in hochfrequente elektrische Energie wie z.B. ein Entladungselement (9), eine Funkenstrecke oder eine Gasentladungsröhre, eine insbesondere im Sperrdurchbruch arbeitende Diode, eine Varaktordiode bzw. ein Avalanche-Halbleiterelement etc. besteht.

18. Vorrichtung nach Anspruch 16 oder 17, **dadurch gekennzeichnet, dass** die Auswerteeinrichtung (4) insbesondere zentral angeordnet und rechnergestützt arbeitend ausgebildet ist.

19. Vorrichtung nach einem der Ansprüche 16 bis 18, **dadurch gekennzeichnet, dass** die Sendeeinrichtung(en) (11) eine Antenne (10) aufweist (ausweisen).

20. Vorrichtung nach einem der Ansprüche 16 bis 19, **dadurch gekennzeichnet, dass** der Stromerzeuger ein Filter wie z. B. eine Oberflächenwellen-Anordnung, insbesondere eine Resonatoranordung, eine insbesondere dispersive Verzögerungsleitung, ein dielektrisches oder mechanisches Filter, einen Volumenschwinger, ein LC-Filter etc. zur Schmalbandsignal-Selektion aus der hochfrequenten elektrischen Energie aufweist.

21. Vorrichtung nach einem der Ansprüche 16 bis 20, **dadurch gekennzeichnet, dass** ein Energiespeicher wie z. B. ein Akkumulator (12), ein Kondensator, eine eventuelle Kapazität des Stromerzeugers oder dergleichen zur Speicherung der vom Stromerzeuger umgewandelten, über den momentanen Bedarf hinausgehenden Energie vorgesehen ist.

22. Vorrichtung nach Anspruch 20 oder 21, soweit auf Anspruch 20 rückbezogen, **dadurch gekennzeichnet, dass** zur Erfassung des Verhaltens einer physikalischen Größe der Filter als Sensor für eine physikalische Größe ausgebildet ist.

## Claims

1. Method of detecting and evaluating temperature-dependent consumption values or measurement values of other physical parameters, wherein sensors detect the measurement values, and the measurement values are relayed by means of radio transmission from at least one transmitter arrangement (11), which is connected to the sensors, to a receiver arrangement which is connected to an evaluating arrangement (4), **characterised in that** the transmission arrangement(s) (11) is (are) supplied with electrical energy by a current generator, which converts mechanical energy existing in the external environment, temperature sensors (1), which are incorporated in heating cost distributors (3) mounted on heaters (2) or the like, being used as the sensors to distribute heating costs, and the energy being supplied by means of a current generator, which comprises a transducer, which converts process energy into electrical energy, and a transforming element which is connected to the transducer and has a non-linear characteristic for transforming the low-frequency electrical energy, generated by the transducer, into high-frequency electrical energy.

2. Method of detecting and evaluating temperature-dependent consumption values or measurement values of other physical parameters, wherein sensors detect the measurement values, and the measurement values are relayed by means of radio transmission from at least one transmitter arrangement (11), which is connected to the sensors, to a receiver arrangement which is connected to an evaluating arrangement (4), more especially according to claim 1, **characterised in that** the transmission arrangement(s) (11) is (are) supplied with electrical energy by a current generator, which converts thermal energy existing in the external environment, temperature sensors (1), which are incorporated in heating cost distributors (3) mounted on heaters (2) or the like, being used as the sensors to distribute heating costs, and the energy being supplied by means of a current generator, which comprises a transducer, which converts process energy into electrical energy, and a transforming element which is connected to the transducer and has a non-linear characteristic for transforming the low-frequency electrical energy, generated by the transducer, into high-frequency electrical energy.

3. Method according to one of the preceding claims, **characterised in that** the energy is supplied by means of a current generator, which comprises a transducer, which converts process energy into electrical energy, a transforming element which is connected to the transducer and has a non-linear characteristic for transforming the low-frequency electrical energy, generated by the transducer, into high-frequency electrical energy, and a filter for selecting a narrow-band signal from the high-frequency electrical energy.

4. Method according to claim 3, **characterised in that** the narrow-band signal is encoded by an encoding arrangement contained in the filter.

5. Method according to one of the preceding claims, **characterised in that** the evaluating arrangement (4) operates centrally and in a computerised manner.

6. Method according to one of the preceding claims, **characterised in that** the transmitter arrangement(s) (11) includes (include) an aerial (10).

7. Method according to claim 1 or one of claims 2 to 6, provided they refer to claim 1, **characterised in that** a transducer, which is in the form of a piezoelectric element, converts mechanical process energy.

8. Method according to claim 1 or one of claims 2 to 7, provided they refer to claim 1, **characterised in that** a transducer, which is in the form of an inductor arrangement provided with a magnet and electric coil, converts mechanical process energy.

9. Method according to claim 2 or one of claims 3 to 8, provided they refer to claim 2, **characterised in that** a transducer, which is in the form of a pyroelectric element or thermocouple element, or respectively is in the form of a thermocouple arrangement (8), converts thermal process energy.

10. Method according to one of claims 1 to 9, **characterised in that** the energy, which is transformed by the current generator and exceeds the instantaneous requirement of the apparatus, is stored in an energy storage unit, such as, for example, accumulator (12), condenser or the like.

11. Method according to claim 3 or one of claims 4 to 10, provided they refer to claim 3, **characterised in that** a discharging element (9) which is, more especially, a transforming element in the form of a spark gap or gas discharge tube and has a non-linear characteristic, transforms the low-frequency electrical energy into high-frequency electrical energy.

12. Method according to claim 3 or one of claims 4 to 10, provided they refer to claim 3, **characterised in that** a transforming element, which is in the form of a diode, more especially a breakdown blocking diode, a varactor diode or respectively an avalanche semiconductor element, and has a non-linear characteristic, transforms the low-frequency electrical energy into high-frequency electrical energy.

13. Method according to claim 4 or one of claims 5 to 12, provided they refer to claim 4, **characterised in that** a filter, which is in the form of a surface-wave arrangement, more especially a resonator arrangement, a delay line or respectively a dispersive delay line, selects a narrow-band signal from the high-frequency electrical energy.

14. Method according to claim 4 or one of claims 5 to 12, provided they refer to claim 4, **characterised in that** a filter, which is in the form of a dielectric filter, a mechanical filter, a volume oscillator or respectively an LC filter, selects a narrow-band signal from the high-frequency electrical energy.

15. Method according to claim 4 or one of claims 5 to 14, provided they refer to claim 4, **characterised in that** the filter, which is in the form of/is effective as the sensor for a physical parameter, detects the behaviour of a physical parameter.

16. Apparatus for detecting and evaluating temperature-dependent consumption values or measurement values of other physical parameters, said apparatus having sensors, which detect the measurement values, and an evaluating arrangement (4), more especially for accomplishing the method according to one of claims 1 to 15, **characterised in that** a transmitter arrangement (transmitter arrangements) (11), which is (are) connected to the sensor(s), is (are) provided with a current generator, which ensures the supply of energy to the transmitter arrangement (11) and transforms mechanical energy existing in the external environment, for relaying the measurement values by means of radio transmission, temperature sensors (1), which are incorporated in heating cost distributors (3) mounted on heaters (2) or the like, being provided as the sensors for distributing heating costs, and the current generator comprising a transducer which converts process energy into electrical energy, such as, for example, a piezoelectric element, an inductor arrangement provided with a magnet and electric coil, a pyroelectric element or a thermocouple element, or respectively a thermocouple arrangement (8), etc., and a transforming element which is connected to the transducer and has a non-linear characteristic for transforming the low-frequency electrical energy, generated by the transducer, into high-frequency electrical energy, such as, for example, a discharging element (9), a spark gap or a gas discharge tube, a more especially breakdown blocking diode, a varactor diode or respectively an avalanche semiconductor element, etc.

17. Apparatus for detecting and evaluating temperature-dependent consumption values or measurement values of other physical parameters, said apparatus having sensors, which detect the measurement values, and an evaluating arrangement (4), more especially for accomplishing the method according to one of claims 1 to 15, more especially according to claim 16, **characterised in that** a transmitter arrangement (transmitter arrangements) (11), which is (are) connected to the sensor(s), is (are) provided with a current generator, which ensures the supply of energy to the transmitter arrangement (11) and transforms thermal energy existing in the external environment, for relaying the measurement values by means of radio transmission, temperature sensors (1), which are incorporated in heating cost distributors (3) mounted on heaters (2) or the like, being provided as the sensors for distributing heating costs, and the current generator comprising a transducer which converts process energy into electrical energy, such as, for example, a piezoelectric element, an inductor arrangement provided with a magnet and electric coil, a pyroelectric element or a thermocouple element, or respectively a thermocouple arrangement (8), etc., and a transforming element which is connected to the transducer and has a non-linear characteristic for transforming the low-frequency electrical energy, generated by the transducer, into high-frequency electrical energy, such as, for example, a discharging element (9), a spark gap or a gas discharge tube, a more especially breakdown blocking diode, a varactor diode or respectively an avalanche semiconductor element, etc.

18. Apparatus according to claim 16 or 17, **characterised in that** the evaluating arrangement (4) is disposed more especially centrally and adapted to operate in a computerised manner.

19. Apparatus according to one of claims 16 to 18, **characterised in that** the transmitter arrangement(s) (11) includes (include) an aerial (10).

20. Apparatus according to one of claims 16 to 19, **characterised in that** the current generator includes a filter, such as, for example, a surface-wave arrangement, more especially a resonator arrangement, a more especially dispersive delay line, a dielectric or mechanical filter, a volume oscillator, an LC filter, etc., for selecting a narrow-band signal from the high-frequency electrical energy.

21. Apparatus according to one of claims 16 to 20, **characterised in that** an energy storage unit, such as, for example, an accumulator (12), a condenser, a possible capacitor for the current generator or the like, is provided for storing the energy which is transformed by the current generator and exceeds the instantaneous requirement.

22. Apparatus according to claim 20 or 21, provided they refer to claim 20, **characterised in that**, to detect the behaviour of a physical parameter, the filter is in the form of a sensor for a physical parameter.

## Revendications

1. Procédé pour l'acquisition et l'évaluation de valeurs de consommation dépendant de la température ou de valeurs de mesure d'autres grandeurs physiques, dans lequel des capteurs acquièrent les valeurs de mesure, lesquelles sont transmises par radiotransmission depuis au moins un dispositif émetteur (11) relié aux capteurs vers un dispositif récepteur relié à un dispositif d'évaluation (4), **caractérisé par le fait que** le(s) dispositif(s) émetteur(s) (11) est/sont alimenté(s) en énergie électrique par un générateur de courant convertissant l'énergie mécanique présente dans l'environnement, les capteurs utilisés pour la répartition de frais de chauffage étant des capteurs de température (1) intégrés dans des répartiteurs de frais de chauffage (3) montés sur des radiateurs (2) ou appareils similaires, et l'alimentation en énergie étant réalisée au moyen d'un générateur de courant constitué d'un convertisseur transformant l'énergie de processus en énergie électrique et d'un élément de conversion à caractéristique non linéaire, couplé au convertisseur, convertissant l'énergie électrique à basse fréquence générée par le convertisseur en énergie électrique à haute fréquence.

2. Procédé pour l'acquisition et l'évaluation de valeurs de consommation dépendant de la température ou de valeurs de mesure d'autres grandeurs physiques, dans lequel des capteurs acquièrent les valeurs de mesure, lesquelles sont transmises par radiotransmission depuis au moins un dispositif émetteur (11) relié aux capteurs vers un dispositif récepteur relié à un dispositif d'évaluation (4), en particulier selon la revendication 1, **caractérisé par le fait que** le(s) dispositif(s) émetteur(s) (11) est/sont alimenté(s) en énergie électrique par un générateur de courant convertissant l'énergie thermique présente dans l'environnement, les capteurs utilisés pour la répartition de frais de chauffage étant des capteurs de température (1) intégrés dans des répartiteurs de frais de chauffage (3) montés sur des radiateurs (2) ou appareils similaires et l'alimentation en énergie étant réalisée au moyen d'un générateur de courant constitué d'un convertisseur transformant l'énergie de processus en énergie électrique et d'un élément de conversion à caractéristique non linéaire, couplé au convertisseur, convertissant l'énergie électrique à basse fréquence générée par le convertisseur en énergie électrique à haute fréquence.

3. Procédé selon l'une des revendications précédentes, **caractérisé par le fait que** l'alimentation en énergie est réalisée au moyen d'un générateur de courant constitué d'un convertisseur transformant l'énergie de processus en énergie électrique, d'un élément de conversion à caractéristique non linéaire, couplé au convertisseur, convertissant l'énergie électrique à basse fréquence générée par le convertisseur en énergie électrique à haute fréquence et d'un filtre utilisé pour la sélection d'un signal à bande étroite à partir de l'énergie électrique à haute fréquence.

4. Procédé selon la revendication 3, **caractérisé par le fait que** le signal à bande étroite est codé par un dispositif de codage contenu dans le filtre.

5. Procédé selon l'une des revendications précédentes, **caractérisé par le fait que** le fonctionnement du dispositif d'évaluation (4) est centralisé et assisté par ordinateur.

6. Procédé selon l'une des revendications précédentes, **caractérisé par le fait que** le(s) dispositif(s) émetteur(s) (11) possède(nt) une antenne (10).

7. Procédé selon la revendication 1 ou l'une des revendications 2 à 6 pour autant que rattachée à la revendication 1, **caractérisé par le fait qu'**un convertisseur se présentant sous la forme d'un élément piézoélectrique transforme l'énergie de processus mécanique.

8. Procédé selon la revendication 1 ou l'une des revendications 2 à 7 pour autant que rattachée à la revendication 1, **caractérisé par le fait qu'**un convertisseur se présentant sous la forme d'un dispositif inducteur avec aimant et bobine électrique transforme l'énergie de processus mécanique.

9. Procédé selon la revendication 2 ou l'une des revendications 3 à 8 pour autant que rattachée à la revendication 2, **caractérisé par le fait qu'**un convertisseur se présentant sous la forme d'un élément pyroélectrique, d'un thermocouple ou d'un réseau de thermocouples (8) transforme l'énergie de processus thermique.

10. Procédé selon l'une des revendications 1 à 9, **caractérisé par le fait que** la part de l'énergie convertie par le générateur de courant dépassant le besoin instantané du dispositif est stockée dans un réservoir d'énergie, comme un accumulateur (12), un condensateur ou similaire.

11. Procédé selon la revendication 3 ou l'une des revendications 4 à 10 pour autant que rattachée à la revendication 3, **caractérisé par le fait qu'**un élément de conversion à caractéristique non linéaire se présentant sous la forme d'un élément à décharge (9), en particulier d'un éclateur ou d'un tube à décharge gazeuse, convertit l'énergie électrique à basse fréquence en énergie électrique à haute fréquence.

12. Procédé selon la revendication 3 ou l'une des revendications 4 à 10 pour autant que rattachée à la revendication 3, **caractérisé par le fait qu'**un élément de conversion à caractéristique non linéaire se présentant sous la forme d'une diode, en particulier d'une diode Zener, d'une diode varactor ou d'un élément semi-conducteur à avalanche, convertit l'énergie électrique à basse fréquence en énergie électrique à haute fréquence.

13. Procédé selon la revendication 4 ou l'une des revendications 5 à 12 pour autant que rattachée à la revendication 4, **caractérisé par le fait qu'**un filtre se présentant sous la forme d'un dispositif à ondes de surface, en particulier d'un dispositif à résonateur, d'une ligne à retard ou d'une ligne à retard dispersive, sélectionne un signal à bande étroite à partir de l'énergie électrique à haute fréquence.

14. Procédé selon la revendication 4 ou l'une des revendications 5 à 12 pour autant que rattachée à la revendication 4, **caractérisé par le fait qu'**un filtre se présentant sous la forme d'un filtre diélectrique, d'un filtre mécanique, d'un oscillateur en volume ou d'un filtre LC sélectionne un signal à bande étroite à partir de l'énergie électrique à haute fréquence.

15. Procédé selon la revendication 4 ou l'une des revendications 5 à 14 pour autant que rattachée à la revendication 4, **caractérisé par le fait que** le filtre conçu/actif comme capteur pour une grandeur physique acquiert le comportement d'une grandeur physique.

16. Dispositif d'acquisition et d'évaluation de valeurs de consommation dépendant de la température ou de valeurs de mesure d'autres grandeurs physiques, avec des capteurs acquérant les valeurs de mesure et un dispositif d'évaluation (4), en particulier pour la réalisation du procédé selon l'une des revendications 1 à 15, prévoyant au moins un dispositif émetteur (11) relié au(x) capteur(s) pour la transmission des valeurs de mesure par radiotransmission, **caractérisé par le fait qu'**un générateur de courant convertissant l'énergie mécanique présente dans l'environnement est prévu pour assurer l'alimentation en énergie du dispositif émetteur (11), des capteurs de température (1) intégrés dans des répartiteurs de frais de chauffage (3) montés sur des radiateurs (2) ou appareils similaires étant prévus comme capteurs en particulier pour la répartition de frais de chauffage, et le générateur de courant étant constitué d'un convertisseur transformant l'énergie de processus en énergie électrique, par exemple un élément piézoélectrique, un dispositif inducteur avec aimant et bobine électrique, un élément pyroélectrique, un thermocouple ou un réseau de thermocouples (8), etc. et d'un élément de conversion à caractéristique non linéaire, couplé au convertisseur, convertissant l'énergie électrique à basse fréquence générée par le convertisseur en énergie électrique à haute fréquence, par exemple un élément à décharge (9), un éclateur ou un tube à décharge gazeuse, une diode Zener, une diode varactor ou un élément semi-conducteur à avalanche, etc..

17. Dispositif d'acquisition et d'évaluation de valeurs de consommation dépendant de la température ou de valeurs de mesure d'autres grandeurs physiques, avec des capteurs acquérant les valeurs de mesure et un dispositif d'évaluation (4), en particulier selon la revendication 16, **caractérisé par le fait qu'**un générateur de courant convertissant l'énergie thermique présente dans l'environnement est prévu pour assurer l'alimentation en énergie du dispositif émetteur (11), des capteurs de température (1) intégrés dans des répartiteurs de frais de chauffage (3) montés sur des radiateurs (2) ou appareils similaires étant prévus comme capteurs en particulier pour la répartition de frais de chauffage, et le générateur de courant étant constitué d'un convertisseur transformant l'énergie de processus en énergie électrique, par exemple un élément piézoélectrique, un dispositif inducteur avec aimant et bobine électrique, un élément pyroélectrique, un thermocouple ou un réseau de thermocouples (8), etc. et d'un élément de conversion à caractéristique non linéaire, couplé au convertisseur, convertissant l'énergie électrique à basse fréquence générée par le convertisseur en énergie électrique à haute fréquence, par exemple un élément à décharge (9), un éclateur ou un tube à décharge gazeuse, une diode Zener, une diode varactor ou un élément semi-conducteur à avalanche, etc..

18. Dispositif selon la revendication 16 ou 17, **caractérisé par le fait que** le dispositif d'évaluation (4) est centralisé et assisté par ordinateur.

19. Dispositif selon l'une des revendications 16 à 18, **caractérisé par le fait que** le(s) dispositif(s) émetteur(s) (11) possède(nt) une antenne (10).

20. Dispositif selon l'une des revendications 16 à 19, **caractérisé par le fait que** le générateur de courant comporte un filtre, par exemple un dispositif à ondes de surface, en particulier un dispositif à résonateur, une ligne à retard dispersive, un filtre diélectrique ou mécanique, un oscillateur en volume ou un filtre LC pour la sélection d'un signal à bande étroite à partir de l'énergie électrique à haute fréquence.

21. Dispositif selon l'une des revendications 16 à 20, **caractérisé par le fait qu'**un réservoir d'énergie, par exemple un accumulateur (12), un condensateur, une éventuelle capacité du générateur de courant ou similaire, est prévu pour stocker la part de l'énergie convertie par le générateur de courant dépassant le besoin instantané.

22. Dispositif selon la revendication 20 ou 21 pour autant que rattachée à la revendication 20, **caractérisé par le fait que** le filtre est conçu comme capteur pour une grandeur physique pour permettre l'acquisition du comportement d'une grandeur physique.
